# EUROPEAN PATENT SPECIFICATION

(11) **EP 3 681 937 B1**
(45) Date of publication and mention of the grant of the patent: **22.09.2021**
(21) Application number: 18755476.1
(22) Date of filing: 16.08.2018
(51) Int. Cl.: C08J 7/12, B08B 17/02, C08G 69/48

(54) **BEVERAGE DISPENSING EQUIPMENT**
GETRÄNKEAUSGABEEINRICHTUNG
ÉQUIPEMENT DE DISTRIBUTION DE BOISSON

(30) Priority: 07.09.2017 GB 201714419
(43) Date of publication of application: 22.07.2020
(73) Proprietor: The Provost, Fellows, Foundation Scholars, and the other members of Board, of the College of the Holy & Undiv. Trinity of Queen Elizabeth near Dublin, Dublin 2 (IE)
(72) Inventor: SCANLAN, Eoin, Dublin 2 (IE); COLAVITA, Paula, Dublin 2 (IE); ESTEBAN-TEJEDA, Leticia, Dublin 2 (IE); DUFF, Thomas, Dublin 2 (IE)
(74) Representative: Tomkins & Co
(86) International application number: PCT/EP2018/072266
(87) International publication number: WO 2019/048212

(56) References cited:
- EP-A1- 3 091 025
- WO-A1-2013/050554
- OHE TAKERU ET AL: "Anti-yellowing Finishing of Nylon Fiber Using a Reaction with Reducing Sugar", SEN'I GAKKAISHI, vol. 66, no. 8, 31 August 2010 (2010-08-31), pages 187-193, XP055505237,

## Description

### Field of the Invention

The present invention relates to beverage dispensing equipment, in particular, beverage dispensing with improved biofouling resistance.

### Background to the Invention

Drinking liquids including beverages which are non-alcoholic such as soft drinks (for example carbonated drinks) and hard or alcohol-containing drinks are often conveyed from a reservoir through dispensing lines to a dispenser for example a dispensing tap. Such an arrangement is often present in premises with a bar.

For example beer and related beverages such as draft (also spelled draught) beverages are often conveyed through dispensing lines such as ducts or pipes from a reservoir such as a keg to an outlet such as a tap for dispensing purposes. Contamination of drink, for example beverage, such as beer, dispensing equipment, including pipes, ducting, valves, taps and restrictor disks, through biofouling is presently combatted in industry by regular cleaning. This process generally involves disassembly of dispensing equipment such as pipelines and taps and flushing a cleaning fluid therethrough with or without additional mechanical action. Alternatively, dispensing equipment may be cleaned via cleaning-in-place (CIP), wherein cleaning fluid is flushed through the equipment. This process can be tedious and costly, in terms of loss of product for example beer, down time, and the expense of cleaning products.

Pipelines conveying both alcoholic and non-alcoholic beverages are subject to biofouling. In addition to, for example, beer dispensing lines, pipelines conveying cider, soft drinks, juices, water and dairy products such as milk can be similarly affected.

Several approaches have been developed to combat biofouling in beer dispensing equipment.

US5645697 describes a method for preventing contaminant build-up in a beer supply line by locating electromagnetic field generating means adjacent a section of a beer dispensing line, applying a frequency modulated square wave voltage signal to said electromagnetic field generating means to generate a varying frequency electromagnetic field in that section of the dispensing line. The authors present several explanations for the reduction in contaminants including that the applied electromagnetic field created in the pipe or duct carrying the beer interferes with electron transport within bacterial cells, leading to cell stasis or death; and/or that the electromagnetic field may block uptake of key nutrients thereby inhibiting bacterial cell growth.

GB236106 is also concerned with the application of an electromagnetic field about beer dispensing equipment.

WO2008035051 describes a fluid conveying conduit comprising a coil for producing a magnetic field within the body of the conduit. The authors describe disadvantages associated with wrapping coils for electromagnetic generation about beer lines, for example that said coils are prone to damage, particularly when lines are being moved. The system of WO2008035051 has the magnetic coil in-built in the conduit thereby reducing the likelihood of damage to the coil.

Biofouling in beverage dispensing equipment which carry milk containing products is particularly problematic, for example, milk spoiling in coffee machines will compromise the quality, flavour and taste of coffee produced thereby. Saint-Gobain® have developed a platinum-cured silicon tubing under the trade name Tygon® SPT-50 LF to address this issue.

WO2013050554 discloses surfaces having a carbohydrate immobilised thereon, the carbohydrate having a linker moiety covalently bound thereto, the linker moiety disposed between the surface and the carbohydrate, and the linker moiety comprising a carbon atom that forms a covalent bond with an atom on the surface, wherein the carbon atom of the linker moiety that forms a covalent bond with an atom on the surface is not substituted with a =O, =N or =S moiety, wherein the carbon atom in the linker moiety that forms a covalent bond with an atom on the surface is a component of an aromatic or aryl linker. The surfaces disclosed therein may be used in the manufacture of biofouling resistant material.

JPH032115533 describes the immobilisation of D-glucosamine or an oligomer thereof to a polymer moulding via a cross-linking agent. Polymers are reacted with difunctional cross-linking agents, such as glutaraldehyde hydrate, to form a covalent linkage between the polymer and the cross-linking agent, and the resulting product is subsequently reacted with glucosamine, to form a polymer having glucosamine tethered thereto via a linker. The products are described as highly hydrophilic polymers and may be used for example to form woven fabrics such as underwear.

EP3091025 provides one solution to address the issue of biofouling in beverage dispensing equipment. Therein beverage dispensing equipment comprising a surface having a disaccharide immobilised thereon is described. The disaccharide is covalently bound to a linker moiety which in turn is bound to the surface. The linker moiety is disposed between the surface and the disaccharide, and the linker moiety comprises a carbon atom that forms a covalent bond with an atom on the surface.

The method of EP3091025 employs diazonium chemistry to covalently bond the linker - to which the disaccharide is covalently bound - to an atom on the surface of the beverage dispensing equipment.

Notwithstanding the various methods and apparatus that are available to combat biofouling in beverage dispensing equipment, it is desirable to provide an alternative construction of beverage dispensing equipment, and an alternative approach for combatting biofouling.

### Summary of the Invention

In one aspect, the present invention provides beverage dispensing equipment comprising an article having a polyamide surface, said polyamide surface comprising the following functionality: 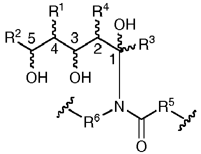 wherein:
R¹ is -OH, a monosaccharide sugar or a disaccharide sugar;
R² is -H, -CH₃ or -CH₂OH;
R³ is -H or -CH₂OH;
R⁴ is -OH or -NH₂; and
wherein: 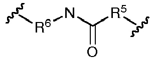 represents the polyamide or part thereof,
wherein R⁵ and R⁶ are each independently selected from a C₄-C₁₂ alkyl group, or a C₆-C₁₂ aryl group, wherein R₅ and R₆ are each independently optionally substituted with one or more C₁-C₆ alkyl groups, one or more halogen atoms, one or more oxo groups and one or more amine groups.

R¹ may be -OH.

R² may be -CH₂OH.

R³ may be -H.

R⁴ may be -OH.

Suitably, R¹ is -OH, R² is -CH₂OH, R³ is -H and R⁴ is -OH.

Advantageously, the functionalised polyamide surface resists biofouling.

The polyamide surface may comprise functionality selected from the following group: 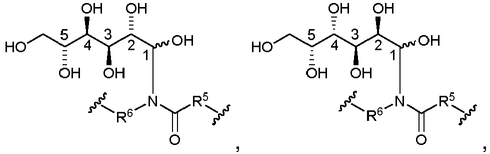 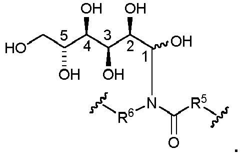 and

Alternatively, R² may be -CH₃.

Suitably, R¹ is -OH, R² is -CH₃, R³ is -H, and R⁴ is -OH.

The polyamide surface may comprise functionality selected from the following group:

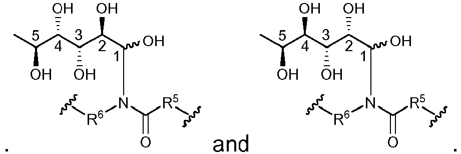

In some embodiments, R¹ is a monosaccharide sugar selected from glucose, galactose, mannose, rhamnose, fucose, glucosamine, fructose, ribose and xylose.

Suitably, the polyamide surface is a nylon surface. For example, the nylon surface may be selected from nylon-6, nylon-7, nylon-8, nylon-9, nylon-10, nylon-11 and nylon-12. The nylon surface may be selected from nylon-4,6, nylon-6,6, or nylon-6,12.

The polyamide surface may comprise the following functionality: 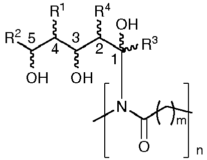
where n is an integer,
and m is 2 to 12.

Suitably, m may be 10.

The beverage dispensing equipment may comprise beverage dispensing lines, or beverage dispensing taps. For example, the beverage dispensing equipment may comprise beer dispensing lines, soft drink dispensing lines, dairy-product dispensing lines.

Also provided is a method for manufacturing beverage dispensing equipment according to the present invention, comprising the following steps:
(i) activating a polyamide surface by treating said surface with a basic solution comprising an oxidising agent; and
(ii) treating the activated polyamide surface with a solution comprising a reducing sugar.

The oxidising agent may be sodium hypochlorite.

Treating the surface with a basic solution comprising an oxidising agent may comprise exposing said surface to multiple aliquots of said basic solution comprising said oxidising agent.

The basic solution comprising an oxidising agent may comprise a solution of sodium hydroxide and/or potassium hydroxide.

The reducing sugar may be selected from the group consisting of: glucose, galactose, mannose, rhamnose, fucose, glucosamine, fructose, ribose, xylose, cellobiose, lactose and maltose.

In some embodiments, the absolute configuration of the reducing sugar may be D. In other embodiments, the absolute configuration of the reducing sugar may be L.

Advantageously, the method of manufacture disclosed herein does not require the use of cross-linking agents such as dialdehydes. Furthermore, the surfaces of the invention are non-toxic and the beverage dispensing equipment of the present invention does not require cleaning at the frequency at which state of the art beverage dispensing equipment requires.

The beverage dispensing equipment according to the present invention can easily replace state of the art beverage dispensing equipment and requires less maintenance than said beverage dispensing equipment.

### Brief Description of the Drawings

Embodiments of the invention will be described, by way of example only, with reference to the accompanying drawings in which:
**Figure 1(a)** XPS spectra in the F 1s region of nylon powder coated with a polyhydroxylated component derived from F-galactose.
**Figure 1(b)** ¹⁹F NMR spectra of the nylon coated with F-galactose.
**Figure 2** shows emission intensities of surface adsorbed Bovine Serum Albumin (BSA) on nylon functionalised with polyhydroxylated components derived from mannose, galactose, lactose and maltotriose. Error bars represent standard deviations calculated over three samples. The dashed line represents the nylon pre-treated with a basic solution of sodium hypochlorite (BB) (control).
**Figure 3** shows emission intensities of surface absorbed Concanavalin A (ConA) on nylon functionalised with a polyhydroxylated component derived from galactose, and nylon functionalised with a polyhydroxylated component derived from lactose, and emission intensities of surface absorbed peanut agglutinin from *Arachis hypogaea* (PNA) on nylon functionalised with a polyhydroxylated component derived from mannose and on nylon functionalised with a polyhydroxylated component derived from mannobiose.
**Figure 4** shows emission intensities of surface adsorbed BSA on nylon BB pre-treated surfaces after immersion in freshly prepared solutions of Methyl alpha/beta-D-Mannopyranoside (Man-Me), trehalose and lactobionic acid. Error bars represent standard deviations calculated over three samples.
**Figure 5** shows the results of biofilm studies with *Saccharomyces cervisiae* against three different surfaces: (a) bare nylon, (b) nylon functionalised with a polyhydroxylated component derived from mannose, and (c) nylon functionalised with a polyhydroxylated component derived from maltotriose. The scale bar is 40 µm.
**Figure 6** shows the effect of functionalisation of polyamide surfaces on line cleanliness via turbidity assessment of dispensed water.
**Figure 7a and Figure 7b** show the effect of functionalised polyamide surfaces on line cleanliness by determining adenosine triphosphate (ATP) concentration in drawn rinsing water.
**Figure 8** shows the effect of functionalised polyamide surfaces on line cleanliness via crystal violet staining of biofilm in drawn rinsing water.
**Figure 9** shows Scanning Electron Microscopy (SEM) images of the internal surfaces of a dispensing line comprising an uncoated polyamide surface (Figure 9a) and a dispensing line comprising a functionalised polyamide surface (Figure 9b) and a dispensing line after a 56 calendar day test.

### Detailed Description

The present invention provides beverage dispensing equipment comprising an article having a polyamide surface, said polyamide surface comprising the following functionality: 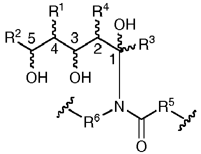 wherein:
R¹ is -OH, a monosaccharide sugar or a disaccharide sugar;
R² is -H, -CH₃ or -CH₂OH;
R³ is -H or -CH₂OH;
R⁴ is -OH or -NH₂; and
wherein: 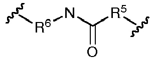 represents the polyamide or part thereof,
wherein R⁵ and R⁶ are each independently selected from a C₄-C₁₂ alkyl group, or a C₆-C₁₂ aryl group, wherein R₅ and R₆ are each independently optionally substituted with one or more C₁-C₆ alkyl groups, one or more halogen atoms, one or more oxo groups and one or more amine groups.

The beverage dispensing equipment comprising an article having a polyamide surface, may comprise a polyamide surface may comprise the following functionality:

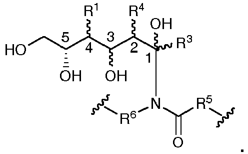

R¹ may be -OH.

R³ may be H.

R⁴ may be -OH.

Suitably, R¹ is -OH, R³ is -H and R⁴ is -OH.

In some embodiments, R¹ is a monosaccharide sugar selected from glucose, galactose, mannose, rhamnose, fucose, glucosamine, fructose, ribose and xylose.

In a preferred embodiment, the polyamide surface is a nylon surface, for example, the nylon surface may be selected from nylon-6, nylon-8, nylon-10, nylon-11 and nylon-12.

The polyamide surface may comprise the following functionality: 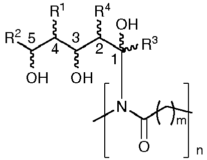
where n is an integer,
and m is 2 to 12.

Suitably, m may be 10.

For example, the polyamide surface may comprise the following functionality 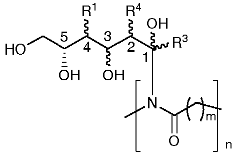
where n is an integer,
and m is 2 to 12.

Preferably, m is 8 to 12, more preferably m is 10.

Suitably, the beverage dispensing equipment may be beverage dispensing lines or beverage dispensing taps. For example, the beverage dispensing equipment may be beer dispensing equipment, such as beer dispensing lines or taps. The beverage dispensing equipment may be soft drink dispensing lines or taps, or dairy-product dispensing lines or taps.

Advantageously, the beverage dispensing equipment comprising an article having a polyamide surface according to the invention comprises a biofouling resistant surface. The polyamide surface may be coated with polyhydroxylated components (derived from reducing sugars), which resist fouling by protein and cells. The polyhydroxylated component is formed when the activated surface reacts with the reducing terminus of a reducing sugar, i.e. when the activated polyamide surface reacts with a terminal aldehyde group in a reducing sugar. The polyhydroxylated component is connected directly to the polyamide surface via a covalent linkage from a carbon atom of the polyhydroxylated component to an amido nitrogen of the polyamide surface. The amido nitrogen is integrated in the polyamide polymer network which forms the polyamide surface. The connection formed between the polyhydroxylated component and the polyamide surface, is not for example, via a linker. Advantageously, direct covalent connection between a carbon atom in the polyhydroxylate component and an amido nitrogen integrated in the polyamide surface is significantly stronger than for example, connection between the polyamide surface and a saccharide moiety via an anomeric oxygen.

Advantageously, the beverage dispensing equipment according to the present invention can easily replace conventional beverage dispensing equipment and requires less maintenance than conventional beverage dispensing equipment. Specifically, the beverage dispensing equipment of the present invention, owing to its biofouling resistant surface, does not need to be cleaned as often as conventional beverage dispensing equipment.

Also provided is a method for manufacturing beverage dispensing equipment according to the present invention, comprising the following steps:
(i) activating a polyamide surface by treating said surface with a basic solution comprising an oxidising agent; and
(ii) treating the activated polyamide surface with a solution comprising a reducing sugar.

Advantageously, the method may be easily carried out on conventional beverage dispensing equipment. For example, beverage dispensing equipment, such as a nylon beer line, may be functionalised by the method of the invention, to provide a beverage dispensing equipment according to the invention, which has increased biofouling resistance. The method of the invention is robust, and can be conducted onsite, without the need for specialist equipment. This represents a marked advancement on previous technology, wherein parameters such as temperature and light exposure, must be rigorously controlled in order to functionalise surfaces with carbohydrates.

For example, a nylon beer line may be treated with a basic solution comprising an oxidising agent to activate the nylon surface i.e. to provide an activated polyamide surface. The basic solution comprising an oxidising agent (i.e. the activating solution) may comprise a solution of sodium hydroxide and/or potassium hydroxide. The line may be activated by exposing the line, for a period of 5 to 15 minutes, to an aliquot of activating solution. The process may be repeated using further aliquots of activating solution. The activating solution is then flushed, and the line comprising the activated polyamide surface is treated with a solution comprising a reducing sugar. Treating the activated polyamide surface may involve exposing the activated polyamide surface to a solution comprising a reducing sugar. The solution comprising a reducing sugar, may be a basic solution comprising an oxidising agent and the reducing agent.

Advantageously, the method of manufacture of the beverage dispensing equipment of the present invention does not require the use of cross-linking agents. This increases the atom economy of the present invention over state of the art technologies for functionalising polymeric surfaces. Furthermore, many state of the art cross-linking strategies for functionalising polymeric surfaces employ toxic cross-linking agents such as dialdehydes, which would render them unsuitable for forming beverage dispensing equipment. Therefore, the present methodology represents a marked advancement on the state of the art.

### Definitions

Terms in the following format: "[saccharide X]-functionalised [polyamide surface]", means a polyamide surface functionalised with a polyhydroxylated component derived from saccharide X. For example, "mannose-functionalised nylon" means nylon functionalised with a polyhydroxylated component derived from mannose; "lactose-functionalised nylon" means nylon functionalised with a polyhydroxylated component derived from lactose; "maltotriose-functionalised nylon" means nylon functionalised with a polyhydroxylated component derived from maltotriose; "mannobiose-functionalised nylon" means nylon functionalised with a polyhydroxylated component derived from mannobiose. Terms in the above format may also be represented in the following manner: "lactose-functionalised nylon" may be represented by "nylon-lac"; "mannose-functionalised nylon" may be represented by "nylon-man".

The term "beverage dispensing equipment" includes equipment such as beverage dispensing lines, for example tubing or pipework, through which beverages may be conveyed.

The term "beer" includes for example beer, stout, ale, lager and cider. The term "beer" includes alcoholic and non-alcoholic beers, i.e. "beer" may be alcoholic beer or non-alcoholic beer.

The term "dairy-product" includes for example products comprising milk, cream, butter, or yogurt.

**Chemicals and Materials:** Nylon 6,6 sheets and nylon 6 powder (mean particle size 15-20 µm) were purchased from Goodfellow; sodium hypochlorite, sodium hydroxide, potassium hydroxide, phosphate buffered saline buffer (0.010 M PBS, pH 7.4), sodium nitrite and fluoroboric acid were purchased from Sigma Aldrich. Lectin Concanavalin A (ConA), Bovine Serum Albumin (BSA) and peanut agglutinin from *Arachis hypogaea* (PNA) conjugates with Alexa Fluor 647 were purchased from BioSciences Ltd. Native saccharides (mannose, glucose, galactose, lactose, maltotriose and trehalose) were purchased from Carbosynth. Methyl alpha/beta-D-Mannopyranoside (Mannose-Me) and lactobionic acid were synthesised in accordance with standard procedures. F-Galactose was synthesised as described below.

### 1,2,3,4-Di-O-isopropylidene-6-deoxy-6-fluoro-D-galactose

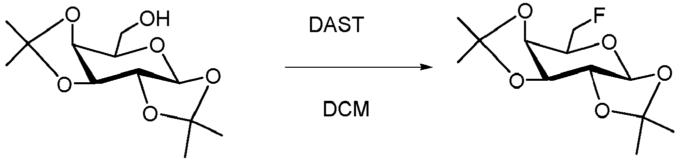

1,2,3,4-Diisopropylidene Galactose (2.5 g, 9.6 mmol) was dissolved in dry dichloromethane (DCM) (40 mL) and to this was added 2,6-lutidine (2.2 mL, 19.3 mmol) followed by diethylaminosulfur trifluoride (DAST) (3.1 g, 19.3 mmol). The mixture was refluxed for 2 h after which TLC analysis showed complete consumption of the starting material. The mixture was diluted with additional DCM (60 mL) and then washed with 1M HCI (100 mL x 2) and Brine (1 x 100 mL) and then dried (MgSO₄). The DCM was removed to give the product as a yellow oil (1.50 g, 60%). ¹H NMR (400 MHz) CDCl₃ : 5.56 (1H, d, *J* = 5.0 Hz, H-1), 4.67-4.57 (2H, m, H-6a, H-3), 4.55-4.46 (1H, m, H-6b), 4.35 (1H, q, *J* = 2.5 Hz, H-2), 4.27 (1H, dd, *J* = 2.0 Hz, *J* = 8.0 Hz, H-4), 4.12-4.05 (1H, m, H-5). ¹³C NMR (100 MHz) CDCl₃ : 109.6, 108.8 (2 x q-C, acetonides), 96.2 (C-1), 82.1 (d, *J* ¹⁹F-¹³C = 169 Hz, C-6), 70.6 (C-3), 70.5 (d, *J* ¹⁹F-¹³C = 7 Hz, C-4), 66.6 (d, *J* ¹⁹F-¹³C = 22 Hz, C-5), 26.0, 25.9, 24.9, 24.4 (4 x CH₃, acetonides). HRMS (*m*/*z* APCI+): Found: 261.1208 ([M + H]⁺ C₁₂H₁₈FO₅ Requires: 261.1217). [α]D²⁰ (c = 0.01, CH₃OH) = +8.0 vₘₐₓ (film)/cm⁻¹: 2990, 1382, 1254, 1210, 1166, 1066, 1000, 962, 857 cm⁻¹.

### 6-Deoxy-6-fluoro-D-galactose (F-galactose)

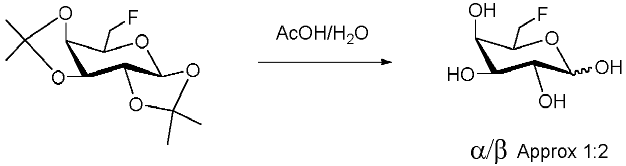

1,2,3,4-Di-*O*-isopropylidene-6-deoxy-6-fluoro-galactose (980 mg, 3.7 mmol) was mixed with AcOH/H₂O 4:1 (30 mL) and heated to 100 °C for 8 h. The solvents were removed and the residue was co evaporated with toluene (50 mL x 2) to remove traces of water. The oily residue was purified by column chromatography (SiO₂/MeOH 20%/EtOAc 80%, v/v: Product R_{f} = 0.4) where the product was isolated as a white solid (400 mg, 60% )which was a mixture of α/β anomers in an approximate ratio of 35/65% as judged by NMR. m.p. 148-150°C ¹H NMR (400 MHz) D₂O: (β-anomer) 4.50 (2H, m, H6), 4.49 (1H, d, *J* = 8.0 Hz, H-1), 3.87 (1H, m, H-5), 3.85 (1H, m, H4), 3.53 (1H, dd, *J*_{3,4} = 3.4 Hz, J_{3,2} = 9.9 Hz, H-3), 3.38 (1H, dd, *J*_{2,1} = 8.0 Hz, *J*_{2,3} = 9.6 Hz, H-2). ¹³C NMR (100 MHz) D₂O: (β-anomer) 96.4 (C-1), 83.0 (d, J ¹⁹F-¹³C = 165 Hz, C-6), 73.4 (d, *J* ¹⁹F-¹³C = 20 Hz, C-5), 72.4 (C-3), 71.6 (C-2), 68.3 (d, *J* ¹⁹F-¹³C = 7 Hz, C-4). ¹⁹F NMR (377 MHz) -229.8 (C-F). ¹H NMR (400 MHz) D₂O: (a-anomer) 5.16 (1H, d, *J* = 3.6 Hz, H-1), 4.50 (2H, m, H-6), 4.20 (1H, m, H-5), 3.91 (1H, m, H-4), 3.75 (1H, dd, *J*_{3,4} = 3.3 Hz, J_{3,2} = 10.5 Hz, H-3), 3.68 (1H, dd, *J*_{2,1} = 3.8 Hz, *J*_{2,3} = 10.2 Hz, H-2). ¹³C NMR (100 MHz) D₂O: (a-anomer) 92.3 (C-1), 83.4 (d, J ¹⁹F-¹³C = 165 Hz, C-6), 68.9 (d, *J* ¹⁹F-¹³C = 20 Hz, C-5), 68.8 (d, *J* ¹⁹F-¹³C = 7 Hz, C-4), 68.7 (C-3), 68.1 (C-2).). ¹⁹F NMR (377 MHz) - 229.8 (C-F). HRMS (*m*/*z* ESI+): Found: 205.0488 ([M + Na]+, C6H11FNaO5 Requires: 205.0482). [α]D²⁰ (c = 0.01, CH3OH) = + 5.4: vmax (film)/cm⁻¹: 3657, 3329, 2981, 1381, 1251, 1148, 1070 cm⁻¹

**Nylon Modification: (40 min protocol)** Activation of nylon surfaces was carried out by treatment with a 0.5% aqueous solution of sodium hypochlorite in base (KOH 1% and NaOH 1%), referred to as BB from here onwards, for 30 min in total, while changing the BB solution every 10 min with a fresh aliquot. After activation, functionalization of the pre-activated nylon surface was carried out via incubation in freshly prepared 0.4 mg/mL solutions of the corresponding native saccharide in BB for 10 min. **(20 min protocol)** Activation of nylon surfaces was carried out by treatment with a 0.5% aqueous solution of sodium hypochlorite in base (KOH 1% and NaOH 1%), referred to as BB from here onwards, for 15 min in total, while changing the BB solution every 5 min with a fresh aliquot. After activation, functionalisation of the pre-activated nylon surface was carried out via incubation in freshly prepared 0.4 mg/mL solutions of the corresponding native saccharide in BB for 5 min.

**Surface Characterization:** X-ray photoelectron spectroscopy (XPS) was performed on a VG Scientific ESCAlab Mk II system (<2 × 10⁻⁸ mbar), using an Al Kα source (1486.6 eV); pass energy was set at 200 eV for survey spectra and 20 eV for high resolution spectra. Spectra were collected with an emission current of 100 mA at 50% of normal operating conditions (200 mA) to minimize sample damage. Peaks were referenced to the C 1s core energy to correct for charging prior to analysis using CasaXPS software. NMR was performed in a Nuclear Magnetic Resonance Bruker spectrometer HD using the single π/2 pulse magic-angle-spinning technique, 400 MHz, 3.2 mm and H/X CP-MAS probe. Static contact angles were measured on a commercial system (FTA1000) in air, using 20 µL droplets.

**Biomolecule-nylon binding studies:** Nylon samples were incubated for 1 h in a 0.5 mg/mL solution of PBS buffer at pH 7.4 including 0.1 mM CaCl₂ and MgCl₂ for ConA and PNA conjugates. For protein adsorption studies, nylon samples were incubated for 1 h in a 0.2 mg/mL BSA solution in PBS buffer at pH 7.4. After incubation, surfaces were washed with PBS solution to remove unbound protein prior to imaging. Fluorescence images were acquired using an Olympus BX51 inverted microscope with a cellSens digital image processing software. Images were acquired with a cube filter set having a 635 nm EdgeBasic long-pass edge filter, a single-edge dichroic beamsplitter filter at 649 nm and a barrier filter at 620-640 nm. Analysis of emission intensities was carried out in triplicate using Image J software.

**Biofilm studies on glycosylated nylon surfaces:** A single colony from *Saccharomyces cerevisiae* BY4741 strain was inoculated in 10 mL of yeast extract peptone dextrose broth (YEPD), composed of 1% (w/v) Yeast Extract, 2% (w/v) Peptone and 2% (w/v) Glucose and incubated overnight at 37 °C. The culture (5 µL) was diluted into fresh media (10 mL) and cultured at 37 °C for 6 h; finally, 310 µL of media (1.615 . 10⁷ CFU/mL) was inoculated on 50 mL of YEPD. The bare nylon surfaces (controls) and the functionalised nylon surfaces were placed into their corresponding fresh media containing the yeast and culture for 6 days at 20°C. The controls and samples were prepared in triplicate.

The functionalisation method involves a two-step process. The first step consists in an activation pre-treatment of polyamide (e.g. nylon) surfaces via exposure to a solution of sodium hypochlorite and base (BB). The second step consists of immobilization of polyhydroxylated components derived from saccharides on the surface, by treating the activated polyaimde (e.g. nylon) surface with a solution comprising a reducing sugar.

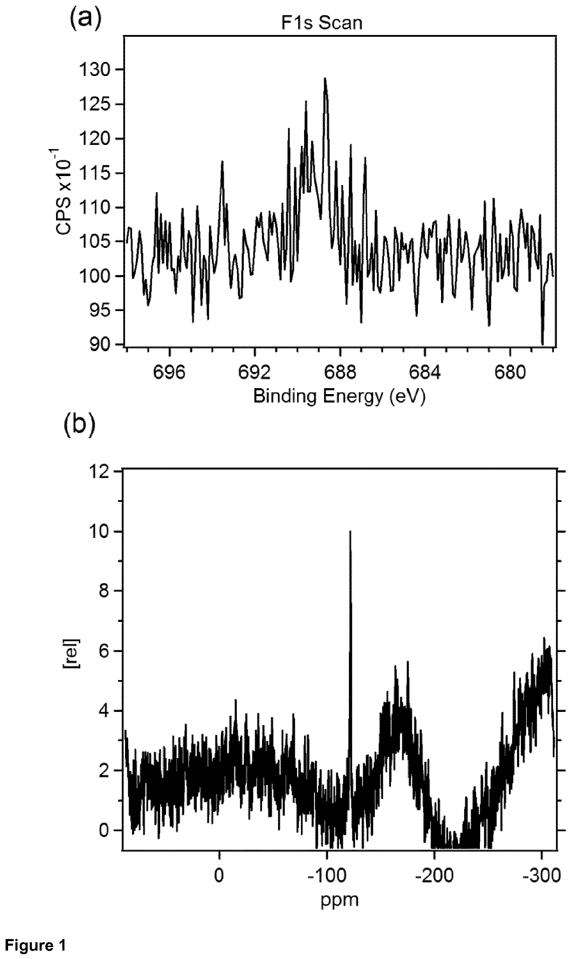

Nylon pre-activated surfaces were functionalised via immersion in freshly prepared solutions of native saccharides. After modification, surfaces were rinsed and dried. The immobilization of the polyhydroxylated components derived from saccharides on the surface was first confirmed via XPS and NMR studies using fluorinated galactose (F-galactose), which was used in order to determine the presence of fluorine on the coated surface (see Figure 1).

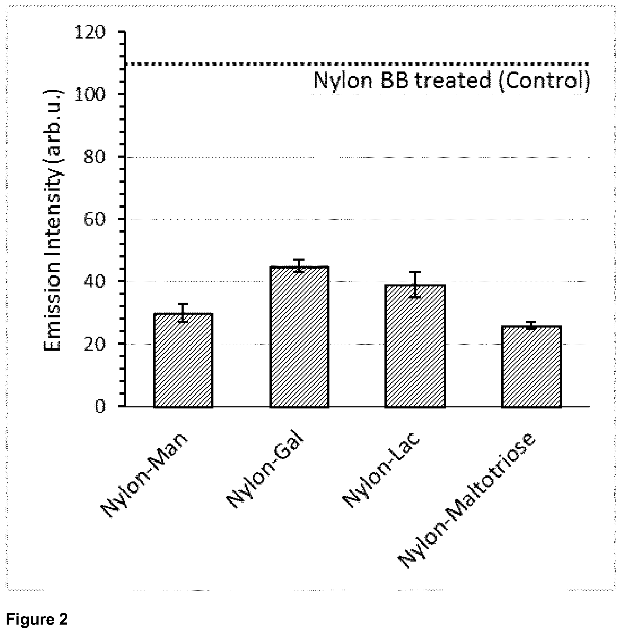

The immobilization of the polyhydroxylated components derived from saccharides on the surface was also confirmed by studying the effect of surface modification on BSA protein absorption. Samples were incubated for 1 hour in a solution of fluorescently labelled BSA protein and rinsed afterwards with PBS prior to imaging. Figure 2 shows average emission intensity values obtained after BSA incubation of nylon surfaces corresponding to: mannose-functionalised nylon, galactose-functionalised nylon, lactose-functionalised nylon and maltotriose-functionalised nylon. After the pre-treatment with BB, the nylon surface is slightly oxidized and the amount of adsorbed protein increases. However, after functionalization with polyhydroxylated components derived from saccharides a remarkable decrease in emission is observed, thus indicating that less BSA adsorbs on polyamide surfaces of the present invention. Results indicate that immobilization of polyhydroxylated components derived from mono, di and trisaccharides leads to a decrease in unspecific protein binding compared to oxidized nylon surfaces.

The immobilization of a polyhydroxylated component on the surface was also confirmed by specific lectin binding interactions. Functionalization was confirmed via ConA binding experiments on mannobiose-functionalised nylon surfaces and via PNA binding experiments on lactose-functionalised nylon surfaces. Specific binding interactions between ConA and mannose and between PNA and galactose are well established and can be used to confirm the presence of surface-bound mannosides (Maupin et al, Glycobiology 2012, 22(1), 160-169; Sharon et al, FASEB Journal 1990, 4(14), 3198-3208).

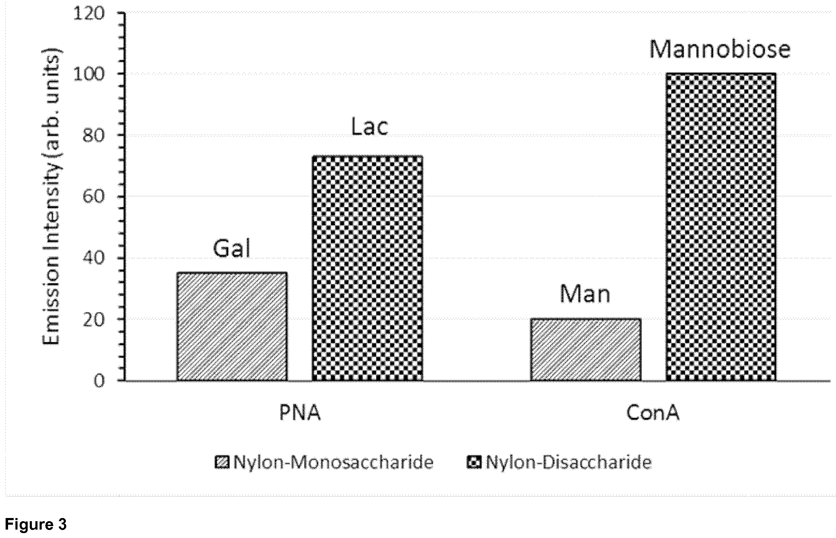

Samples were incubated for 1 hour in a solution of the fluorescently labeled ConA or PNA and rinsed afterwards with PBS prior to imaging. Figure 3 shows emission intensity for galactose-functionalised nylon and lactose-functionalised nylon after treatment with PNA. Once the activated nylon reacts with galactose to produce the galactose-functionalised nylon, the sugar ring of galactose is opened and the resulting polyhydroxylated component which is covalently bound to the nylon surface has significantly reduced binding affinity for PNA. In contrast lactose-functionalised nylon comprises an entact galactose ring after covalently being bound to the nylon surface and therefore retains an ability to bind PNA. Figure 3 also demonstrates the ability of mannobiose-functionalised nylon to bind ConA, whereas mannose-functionalised nylon has markedly reduced binding affinity for ConA.

Greater emissions are observed on mannobiose-functionaised nylon surface when exposed to ConA and on lactose-functionalised nylon surface when exposed to PNA indicating that the increase in the emissions are the result of specific mannose-ConA or galactose-PNA interactions. However, very low emissions (indicating no specific binding) are observed on mannose-functionalised nylon surface when exposed to ConA and on nylon-galactose surface when exposed to PNA, in contrast to the data obtained when using the respectively homodisaccharide-functionalised nylon (mannobiose-functionalised nylon and lactose-functionalised nylon).

These results suggest that the reducing terminus of the reducing sugar is essential in order to modify the nylon surface.

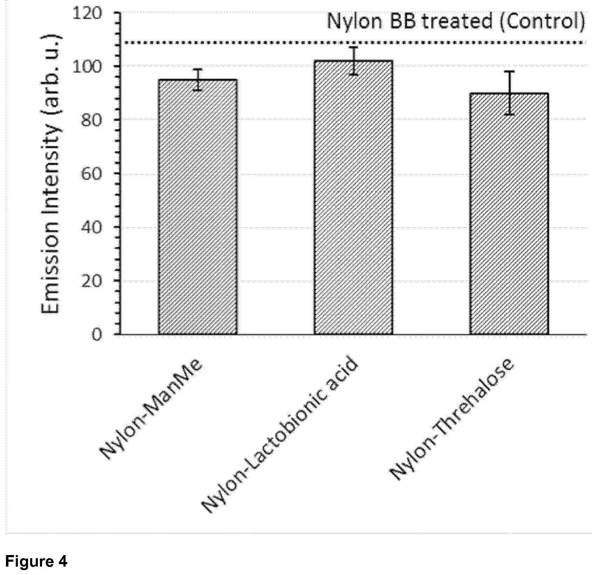

In order to confirm that the mechanism of grafting is via a covalent bond through the anomeric carbon present in the native saccharide, a comparative BSA adsorption study was conducted using nylon surfaces which were activated with BB as described above, and subsequently treated with non-reducing saccharides. In particular, activated nylon was treated with Methyl alpha/beta-D-Mannopyranoside (Man-Me), lactobionic acid and trehalose. Figure 4 shows emission intensity values obtained for the nylon BB pre-treated surfaces after immersion in freshly prepared solutions of Man-Me, trehalose and lactobionic acid. After immersion in the non hemiacetal analogues, no significative BSA rejection was observed. This indicates, that a reducing terminus is necessary for the reaction to occur, and that the the role of the sodium hypochlorite and base mixture in the immobilisation process does not involve oxidation of the saccharides.

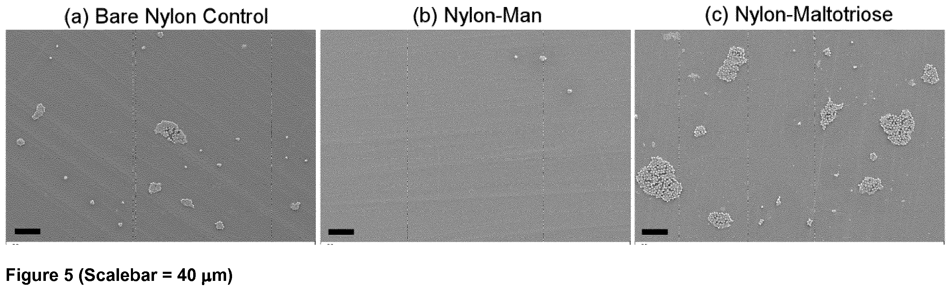

The antifouling properties of nylon surfaces functionalised with polyhydroxylated components derived from mannose (monosaccharide) and maltotriose (a trisaccharide) were evaluated against a *Saccharomyces cerevisiae* which is known for forming biofilms. Figure 5 shows that the bare nylon (i.e. nylon which has not been functionalised in accordance with the present invention) does not display antifouling activity, however when the nylon surface is functionalised with polyhydroxylated components derived from mannose, no biofilm is observed, only a few isolated colonies. Interestingly, when the functionalization of the nylon is with a polyhydroxylated component derived from maltotriose, no antifouling activity was observed obtaining the same amount of biofilm as in the control. This indicates that although functionalisation is achieved when activated nylon is treated with a maltotriose solution, the specific structure of the immobilised moiety (i.e. the chemical make-up of the polyhydroxylated component) has an impact on whether the surface can reject proteins only or also cells. In the case of beverage dispensing systems, rejection of both proteins and/or cells is important for the control of fouling. Thus while maltotriose-functionalised nylon demonstrated significant protein rejection as shown in Figure 2, maltotriose-functionalised nylon did not reject biofouling by *Saccharomyces cerevisiae* yeast cells.

### Experimental Procedure for Beer Trials

**Beverage dispensing setup:** Lines used in our test trials were setup to simulate an ambient temperature beer dispensing setup. This kind of setup is significantly prone to biofouling due to large segments of the line being exposed to ambient temperature conditions while internal surfaces being immersed in beer which is rich in nutrients. Nylon dispensing lines (Nylon-11) that had previously been used in trade were connected to kegs containing beer (stout) using standard tapping and fitting elements. Lines were used in pairs with one of the lines cleaned using standard cleaning-in-place (CIP) procedures and the other cleaned and then functionalised with polyhydroxylated components derived from mannose to form a functionalised polyamide surface. Each pair of control and test lines was sent through a cooling unit that cooled the beer so it was dispensed between 5° and 7° centigrade, this is representative of trade dispense temperatures. Each pair of control and test lines was then sent to a tap which could be used to dispense the beer under pressure from a standard gas tank. In the figures that summarise the results of tests each pair of taps is labelled A, B, and C. The internal volume of the lines used was approximately 800 mL, as measured experimentally, corresponding to total lengths of 10-12 m depending on the specific line. Identical amounts of beer were drawn from each tap over 56 calendar days, on all working days (41 working days).

**Dispensing line treatments:** All lines were cleaned with commercial CIP detergent solution, using pressure delivery of the solution from 15 L or 25 L wash bottles. Control lines were then rinsed with tap water by passing the equivalent of three total internal volumes and subsequently charged with beer. For the treatment with saccharides, cleaned lines were charged completely with a solution containing: 0.5% sodium hypochlorite (3.5:100 dilution from concentrated commercial 14% NaClO), 1% wt. NaOH and 1% wt. KOH in water. The line was exposed to this solution for 10 min and the procedure repeated twice. Immediately afterwards, the lines were charged with a solution containing: 0.4 mg/mL of saccharide (D-mannose), 0.5% sodium hypochlorite, 1% wt. NaOH and 1% wt. KOH in water. The treated lines were exposed to this solution for 10 min, subsequently rinsed with water by passing the equivalent of three total internal volumes, and finally charged with beer ready for use.

**Analysis of line contamination:** A first indication of line cleanliness/contamination was obtained by examining the foam head of pints dispensed from control and saccharide-treated lines at the conclusion of the test period (56 calendar days), as tall foam heads (>1.5 cm) are a qualitative indicator of secondary fermentation in contaminated lines. Lines were emptied from beer and the plastic spouts at the dispensing end were all removed. The lines were then charged with deionised water for a total of one internal volume and one pint to avoid contamination from residual beer in water samples used for analysis. All lines (uncoated and coated) were left exposed to deionised water for 2 min; subsequently, 750 mL of the rinse water from each line were dispensed into sterile plastic containers for analysis. This procedure was carried out three times yielding 3 aqueous samples of 750 mL each for each line; the use of three different rinse draws confirmed that conclusions were independent from the specific set of samples used for the analysis.

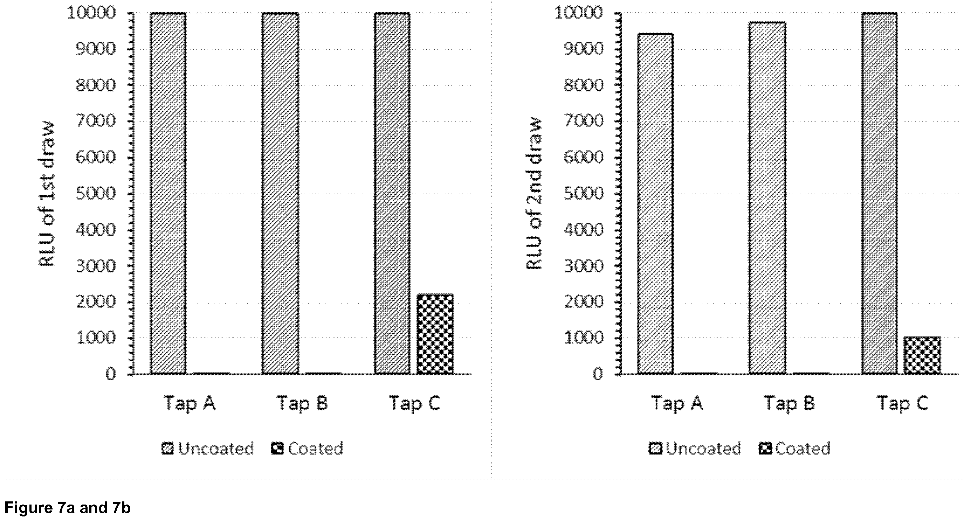

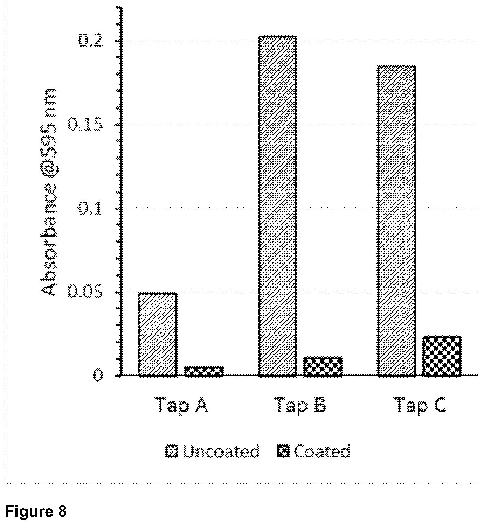

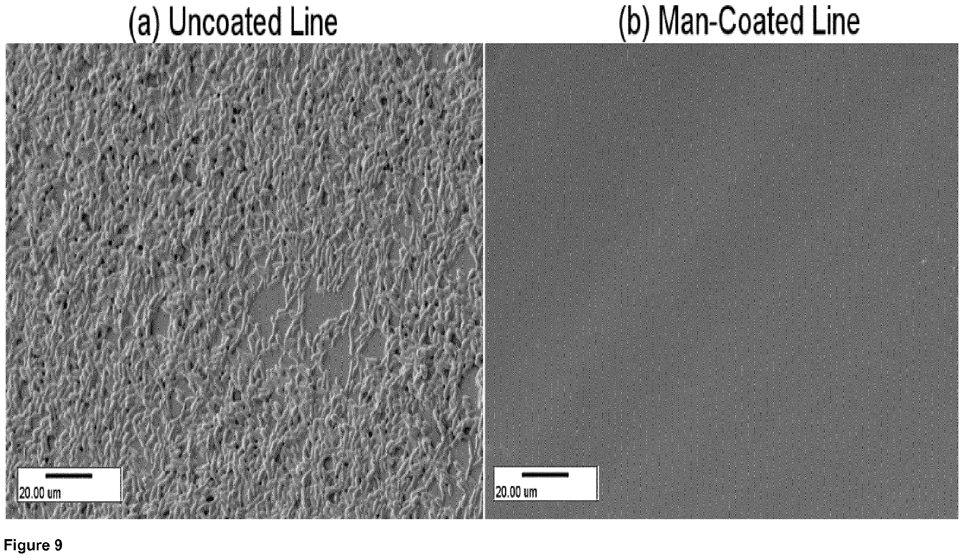

Contamination of coated relative to uncoated lines was quantitatively assessed using a combination of tests: (a) the aqueous solutions drawn from each line were analysed to determine relative turbidity and ATP content (see Figures 7 and 8); (b) the average amount of biofilm retained by the internal nylon walls of the dispensing lines was determined via crystal violet staining (see Figure 8); and (c) visualisation of biofilm was carried out via microscopy analysis of samples of the internal line walls (see Figure 9).

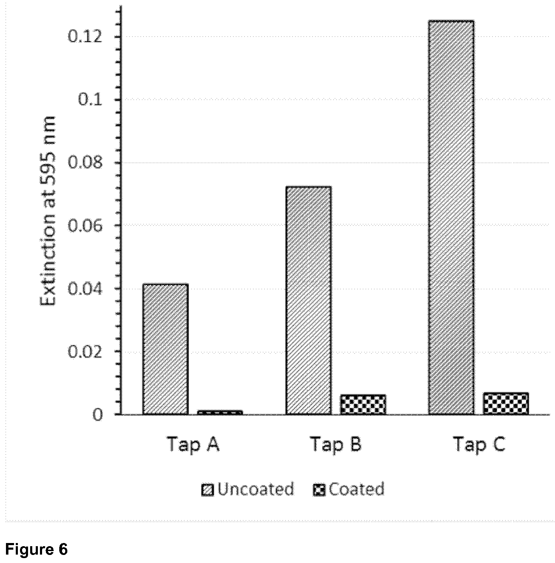

**Figure 6** shows turbidity measurements at 595 nm for water obtained from dispensing lines after 56 calendar day use. Aqueous solutions drawn from all lines were analysed to determine their relative turbidity for lines comprising mannose-functionalised nylon versus uncoated lines using a UV-Vis spectrometer, by monitoring the solution extinction at 595 nm vs. a water blank. Lines comprising saccharide-functionalised polyamide surfaces demonstrated significant antifouling properties.

**Figure 7** shows relative luminescence units measured from solutions of rinsing water drawn from beer dispensing lines after 56 calendar days. Figure 7a (on the left hand side) is for the first volume drawn from coated or uncoated lines and Figure 7b (on the right hand side) is for the second volume drawn for coated or uncoated lines. ATP (adenosine triphosphate) content is an indicator of accumulated biomass; the amount of ATP released in the rinsing water by coated and uncoated lines was compared by monitoring total luminescence using a commercial luciferase assay (Hygiena, AquaSnap). Data are reported in relative luminescence units (RLU), which is the standard readout of the assay. ATP concentration is proportional to RLU units up to values of 10000; in the case of the first draw, ATP concentrations obtained from uncoated lines are beyond the measurable range of the luminometer, while in the second draw they are close to the limit.

**Figure 8** shows absorbance of crystal violet extracted from stained dispensing lines after a test of 56 calendar days. The higher the absorbance the higher the amount of crystal violet extracted from the internal walls of the dispensing lines, thus indicating higher biofilm accumulation. Uncoated lines therefore accumulate larger amounts of biofilm than coated lines. Samples of tubing, 2 cm in length, from the middle section of each line were cut and stained with a 0.01% crystal violet solution via immersion for 2 min, following standard staining protocols. Samples were then rinsed with copious amounts of water to remove unbound dye. The crystal violet dye retained by the biofilm at the internal tubing surface was dissolved in 40 mL of 95% ethanol via immersion (15 min) and the relative amount of dye released by coated and uncoated lines was determined by monitoring absorbance of the dye at 595 nm. The greater the amount of crystal violet released by the tubing into the ethanol, the greater the amount of biofilm retained by the tubing walls.

**Figure 9** shows Scanning Electron Microscopy (SEM) image of the internal surfaces of a dispensing line after 56 calendar day test. The uncoated lines (Figure 9a) show visible accumulation of biomass whereas the line functionalised with a polyhydroxylated component derived from mannose is clean from biofilm. These specific images correspond to the lines in Tap A in Figures 6-8.

Scanning Electron Microscopy (SEM) imaging of the internal walls of the tubing was carried out on dried cuts that had been lightly sputter coated with Au to avoid charging. The relative coverage of biofilm in coated and coated lines can be compared visually as shown in the figures. Figure 9a shows significant biomass accumulation, whereas the mannose-functionalised nylon surface is free from biomass accumulation.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. Beverage dispensing equipment comprising an article having a polyamide surface, said polyamide surface comprising the following functionality: 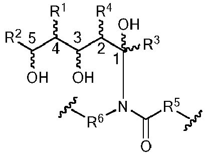 wherein:
R¹ is -OH, a monosaccharide sugar or a disaccharide sugar;
R² is -H, -CH₃ or -CH₂OH;
R³ is -H or -CH₂OH;
R⁴ is -OH or -NH₂; and
wherein: 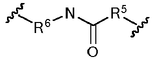 represents the polyamide or part thereof,
wherein R⁵ and R⁶ are each independently selected from a C₄-C₁₂ alkyl group, or a C₆-C₁₂ aryl group, wherein R₅ and R₆ are each independently optionally substituted with one or more C₁-C₆ alkyl groups, one or more halogen atoms, one or more oxo groups and one or more amine groups.

2. Beverage dispensing equipment according to claim 1, wherein R¹ is -OH, R² is - CH₂OH, R³ is -H and R⁴ is -OH.

3. Beverage dispensing equipment according to claim 1 or 2, wherein the polyamide surface comprises a functionality selected from the group comprising:

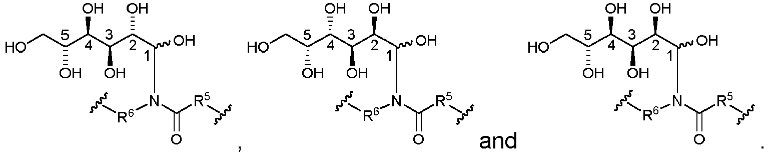

4. Beverage dispensing equipment according to claim 1, wherein R¹ is -OH, R² is - CH₃, R³ is -H, and R⁴ is -OH.

5. Beverage dispensing equipment according to claim 4, wherein the polyamide surface comprises a functionality selected from the group comprising:

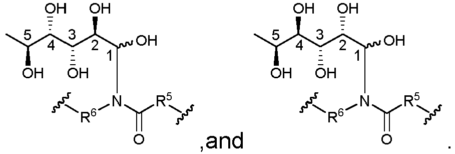

6. Beverage dispensing equipment according to claim 1, wherein R¹ is a monosaccharide sugar selected from the group consisting of glucose, galactose, mannose, rhamnose, fucose, glucosamine, fructose, ribose and xylose.

7. Beverage dispensing equipment according to any preceding claim, wherein the polyamide surface is a nylon surface, for example nylon-4,6, nylon-6,6, nylon-6, nylon-11, nylon-12.

8. Beverage dispensing equipment according to any of claims 1 to 7, wherein the polyamide surface comprises the following functionality: 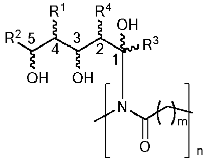
Where n is an integer,
and m is 2 to 12.

9. Beverage dispensing equipment according to claim 8, wherein m is 10 (nylon-11).

10. Beverage dispensing equipment according to any preceding claim, comprising beer dispensing lines, soft drink dispensing lines, or dairy-product dispensing lines.

11. A method for manufacturing beverage dispensing equipment according to any preceding claim, comprising the following steps:
(i) activating a polyamide surface by treating said surface with a basic solution comprising an oxidising agent; and
(ii) treating the activated polyamide surface with a solution comprising a reducing sugar.

12. A method according to claim 11, wherein the oxidising agent is sodium hypochlorite.

13. A method according to claim 11 or 12, wherein treating the surface with a basic solution comprising an oxidising agent, comprises exposing said surface to multiple aliquots of said basic solution comprising said oxidising agent.

14. A method according to any one of claims 11 to 13, wherein the basic solution comprising an oxidising agent, comprises a solution of sodium hydroxide and/or potassium hydroxide.

15. A method according to any one of claims 11 to 14, wherein the reducing sugar is selected from the group consisting of: glucose, galactose, mannose, rhamnose, fucose, glucosamine, fructose, ribose, xylose, cellobiose, lactose and maltose.

## Patentansprüche

1. Getränkeausgabeeinrichtung umfassend einen Gegenstand, der eine Polyamidoberfläche aufweist, wobei die Polyamidoberfläche die folgende Funktionalität aufweist: 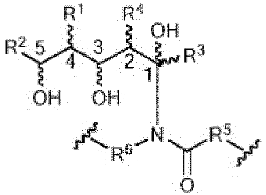 wobei:
R¹ gleich -OH, ein Monosaccharidzucker oder ein Disaccharidzucker ist;
R² gleich -H, -CH₃ oder -CH₂OH ist;
R³ gleich -H oder -CH₂OH ist;
R⁴ gleich -OH oder -NH₂ ist; und
wobei: 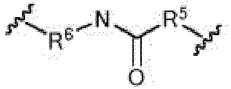 das Polyamid oder einen Teil davon darstellt,
wobei R⁵ und R⁶ jeweils unabhängig ausgewählt sind aus einer C₄-C₁₂-Alkylgruppe oder einer C₆-C₁₂-Arylgruppe, wobei R₅ und R₆ jeweils unabhängig gegebenenfalls substituiert sind mit einer oder mehreren C₁-C₆-Alkylgruppen, einem oder mehreren Halogenatomen, einer oder mehreren Oxogruppen und einer oder mehreren Amingruppen.

2. Getränkeausgabeeinrichtung nach Anspruch 1, wobei R¹ gleich -OH ist, R² gleich -CH₂OH ist, R³ gleich -H ist und R⁴ gleich -OH ist.

3. Getränkeausgabeeinrichtung nach Anspruch 1 oder 2, wobei die Polyamidoberfläche eine Funktionalität aufweist, ausgewählt aus der Gruppe umfassend:

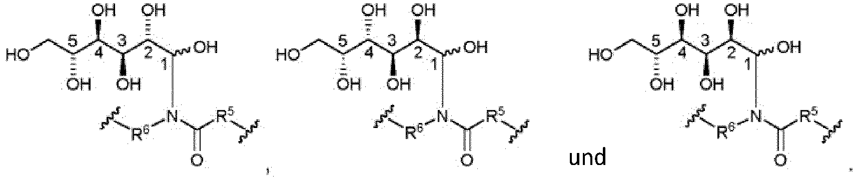

4. Getränkeausgabeeinrichtung nach Anspruch 1, wobei R¹ gleich -OH ist, R² gleich -CH₃ ist, R³ gleich -H ist und R⁴ gleich -OH ist.

5. Getränkeausgabeeinrichtung nach Anspruch 4, wobei die Polyamidoberfläche eine Funktionalität aufweist, ausgewählt aus der Gruppe umfassend:

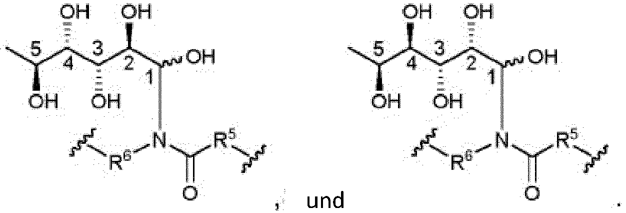

6. Getränkeausgabeeinrichtung nach Anspruch 1, wobei R¹ ein Monosaccharidzucker ist, ausgewählt aus der Gruppe bestehend aus Glucose, Galactose, Mannose, Rhamnose, Fucose, Glucosamin, Fructose, Ribose und Xylose.

7. Getränkeausgabeeinrichtung nach einem der vorhergehenden Ansprüche, wobei die Polyamidoberfläche eine Nylonoberfläche ist, zum Beispiel Nylon-4,6, Nylon-6,6, Nylon-6, Nylon-11, Nylon-12.

8. Getränkeausgabeeinrichtung nach einem der Ansprüche 1 bis 7, wobei die Polyamidoberfläche die folgende Funktion umfasst: 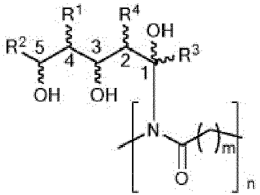
wobei n eine ganze Zahl ist,
und m 2 bis 12 ist.

9. Getränkeausgabeeinrichtung nach Anspruch 8, wobei m gleich 10 ist (Nylon-11).

10. Getränkeausgabeeinrichtung nach einem der vorhergehenden Ansprüche, umfassend Bierausgabeleitungen, Softdrinkausgabeleitungen oder Milchproduktausgabeleitungen.

11. Ein Verfahren zur Herstellung einer Getränkeausgabeeinrichtung nach einem der vorangehenden Ansprüche, umfassend die folgenden Schritte:
(i) Aktivieren einer Polyamidoberfläche durch Behandeln der Oberfläche mit einer basischen Lösung, die ein Oxidationsmittel umfasst; und
(ii) Behandeln der aktivierten Polyamidoberfläche mit einer Lösung, die einen reduzierenden Zucker enthält.

12. Ein Verfahren nach Anspruch 11, wobei das Oxidationsmittel Natriumhypochlorit ist.

13. Ein Verfahren nach Anspruch 11 oder 12, wobei das Behandeln der Oberfläche mit einer basischen Lösung, die ein Oxidationsmittel umfasst, umfasst, die Oberfläche mehreren Aliquoten der basischen Lösung, die das Oxidationsmittel umfasst, auszusetzen.

14. Ein Verfahren nach einem der Ansprüche 11 bis 13, wobei die basische Lösung, die ein Oxidationsmittel enthält, eine Lösung von Natriumhydroxid und/oder Kaliumhydroxid enthält.

15. Ein Verfahren nach einem der Ansprüche 11 bis 14, wobei der reduzierende Zucker ausgewählt ist aus der Gruppe bestehend aus: Glucose, Galactose, Mannose, Rhamnose, Fucose, Glucosamin, Fructose, Ribose, Xylose, Cellobiose, Lactose und Maltose.

## Revendications

1. Équipement de distribution de boisson comportant un article ayant une surface en polyamide, ladite surface en polyamide comportant la fonctionnalité suivante : 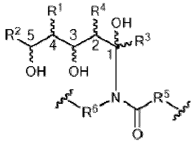 dans laquelle :
R¹ est -OH, un sucre de monosaccharide ou un sucre de disaccharide,
R² est -H, -CH₃ ou -CH₂OH,
R³ est -H ou -CH₂OH,
R⁴ est -OH ou -NH₂, et
dans laquelle : 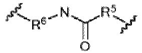 représente le polyamide ou une partie de celui-ci,
dans laquelle R⁵ et R⁶ sont choisis indépendamment l'un de l'autre parmi un groupe alkyle en C₄ à C₁₂ ou un groupe aryle en C₆ à C₁₂, dans laquelle R₅ et R₆ sont optionnellement substitués indépendamment l'un de l'autre par un ou plusieurs groupes alkyle en C₁ à C₆, un ou plusieurs atomes d'halogène, un ou plusieurs groupes oxo et un ou plusieurs groupe amine.

2. Équipement de distribution de boisson selon la revendication 1, dans lequel R¹ est -OH, R² est -CH₂OH, R³ est -H et R⁴ est -OH.

3. Équipement de distribution de boisson selon la revendication 1 ou 2, dans lequel la surface en polyamide comporte une fonctionnalité choisie parmi le groupe comportant :

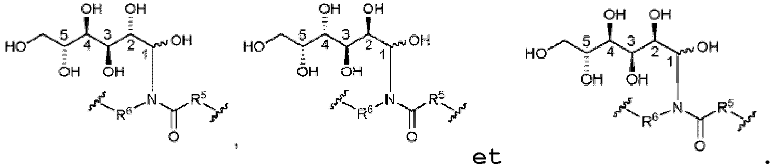

4. Équipement de distribution de boisson selon la revendication 1, dans lequel R¹ est -OH, R² est -CH₃, R³ est -H et R⁴ est -OH.

5. Équipement de distribution de boisson selon la revendication 4, dans lequel la surface en polyamide comporte une fonctionnalité choisie parmi le groupe comportant :

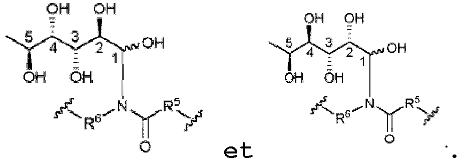

6. Équipement de distribution de boisson selon la revendication 1, dans lequel R¹ est un sucre de monosaccharide choisi parmi le groupe constitué de glucose, galactose, mannose, rhamnose, fucose, glucosamine, fructose, ribose et xylose.

7. Équipement de distribution de boisson selon l'une quelconque des revendications précédentes, dans lequel la surface en polyamide est une surface en nylon, par exemple nylon-4,6, nylon-6,6, nylon-6, nylon-11, nylon-12.

8. Équipement de distribution de boisson selon l'une quelconque des revendications 1 à 7, dans lequel la surface en polyamide comporte la fonctionnalité suivante : 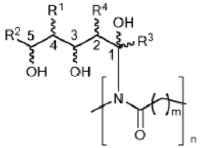 où n est un entier et m est compris entre 2 et 12.

9. Équipement de distribution de boisson selon la revendication 8, dans lequel m est égal à 10 (nylon-11) .

10. Équipement de distribution de boisson selon l'une quelconque des revendications précédentes, comportant des lignes de distribution de bières, des lignes de distribution de boissons non alcoolisées ou des lignes de distribution de produits laitiers.

11. Procédé pour fabriquer un équipement de distribution de boisson selon l'une quelconque des revendications précédentes, comportant les étapes suivantes consistant à :
(i) activer une surface en polyamide en traitant ladite surface avec une solution basique comportant un agent oxydant, et
(ii) traiter la surface en polyamide activée avec une solution comportant un sucre réducteur.

12. Procédé selon la revendication 11, dans lequel l'agent oxydant est l'hypochlorite de sodium.

13. Procédé selon la revendication 11 ou 12, dans lequel le traitement de la surface avec une solution basique comportant un agent oxydant, comporte l'exposition de ladite surface à de multiples aliquotes de ladite solution basique comportant ledit agent oxydant.

14. Procédé selon l'une quelconque des revendications 11 à 13, dans lequel la solution basique comportant un agent oxydant, comporte une solution d'hydroxyde de sodium et/ou d'hydroxyde de potassium.

15. Procédé selon l'une quelconque des revendications 11 à 14, dans lequel le sucre réducteur est choisi parmi le groupe constitué de : glucose, galactose, mannose, rhamnose, fucose, glucosamine, fructose, ribose, xylose, cellobiose, lactose et maltose.
